# EUROPÄISCHE PATENTSCHRIFT

(11) **EP 2 987 606 B1**
(45) Veröffentlichungstag und Bekanntmachung des Hinweises auf die Patenterteilung: **18.03.2020**
(21) Anmeldenummer: 14181643.9
(22) Anmeldetag: 20.08.2014
(51) Int. Cl.: B29C 49/46, B29C 49/06, B29C 49/12, B29C 49/36, B29L 31/00

(54) **Verfahren zum Ausformen und Füllen von Behältern und Formfüllmaschine**
Method for de-moulding and filling containers and mould filling machine
Procédé de démoulage et de remplissage de récipient et remplisseuse de moule

(43) Veröffentlichungstag der Anmeldung: 24.02.2016
(73) Patentinhaber: Krones AG, 93073 Neutraubling (DE)
(72) Erfinder: Voth, Klaus, 93073 Neutraubling (DE); Roidl, Wolfgang, 93073 Neutraubling (DE)
(74) Vertreter: Grünecker Patent- und Rechtsanwälte PartG mbB

(56) Entgegenhaltungen:
- WO-A1-2014/103188
- US-A1- 2004 113 328
- US-A1- 2011 031 659

## Beschreibung

Die Erfindung betrifft ein Verfahren zum Ausformen und Füllen von Kunststoffbehältern und eine Formfüllmaschine zum Durchführen des erfindungsgemäßen Verfahrens.

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Die US 2004/113328 A1 offenbart ein Verfahren, bei dem Vorformlinge mittels Wasser zu Behältern geblasen werden. Dieses Formfluid kann durch ein sterilisierendes Produkt ersetzt werden, um das Innere der hydraulisch geblasenen Behälter zu entkeimen. Ferner werden die Behälter optional ausgeblasen und können dann in sterilem Zustand mit einem Lebensmittel, Getränk oder dergleichen gefüllt werden.

Die WO 2014/103188 A1 offenbart ferner ein Verfahren zum hydraulischen Blasen von Behältern, bei dem das unter Druck stehende Fluid zunächst im Kreislauf geführt wird. Nach dem Recken der Vorformlinge wird dieser Kreislauf unterbrochen und das Blasventil geöffnet, so dass das Formfluid in den Vorformling gedrückt wird und sich der Behälter in der Blasform ausbildet. Sobald die Zufuhr des Formfluids aus dem Druckzylinder unterbrochen ist, wird die teilweise noch in den Behälter ragende Reckstange zurückgezogen, so dass der Flüssigkeitsspiegel im Behälter auf einen vorgegebenen Füllstand sinkt. Beim Formfluid kann es sich um ein Produkt handeln, das gleichzeitig mit der Behälterherstellung in die Behälter abgefüllt wird.

Aufgabe der vorliegenden Erfindung ist es, bekannte Vorrichtungen und Verfahren zum Ausformen und Füllen von Kunststoffbehältern in vorteilhafter Weise weiterzubilden. Insbesondere soll der für das Herstellen und Füllen der Kunststoffbehälter benötigte apparative und/oder zeitliche Aufwand reduziert werden.

Diese Aufgabe wird mit einem Verfahren nach Anspruch 1 und einer Formfüllmaschine nach Anspruch 10 gelöst. Vorteilhafte Ausführungsformen der Erfindung sind in den Unteransprüchen definiert.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Das erfindungsgemäße Verfahren dient zum Ausformen und Füllen von Behältern aus Kunststoff, bei dem Vorformlinge in Hohlformen durch zumindest anteiliges Einleiten eines inkompressiblen Formfluids unter Überdruck zu den Behältern umgeformt werden, und bei dem die Behälter in den Hohlformen mit einem Produkt gefüllt werden, indem das Formfluid durch das Produkt ersetzt wird oder durch wenigstens eine Komponente des Produkts teilweise ersetzt wird. Das inkompressible Formfluid ist somit nicht mit dem in der Hohlform abgefüllten und/oder ausgemischten flüssigen Produkt identisch.

Die Vorformlinge bestehen aus einem thermoplastischen Kunststoff, wie beispielsweise PET, PE, PP oder dergleichen, und können auf herkömmliche Weise für das Umformen in einem voran geschalteten Ofen erwärmt werden.

Unter dem zumindest anteiligen Einleiten eines inkompressiblen Formfluids ist zu verstehen, dass zumindest ein Teil des Umformprozesses in der Hohlform, insbesondere ein abschließender Teil des Umformprozesses, durch hydraulisches Aufpressen des Vorformlings / Behälters mittels eines inkompressiblen Formfluids erfolgt und höchstens anteilig durch pneumatisches Aufblasen mittels eines kompressiblen Formfluids, wie beispielsweise Pressluft, ergänzt wird.

Besonders vorteilhaft ist das erfindungsgemäße Verfahren, wenn das Umformen in der Hohlform ausschließlich mittels wenigstens eines inkompressiblen Formfluids erfolgt, dieses vor dem Einfüllen des Produkts vollständig aus dem Behälter entfernt wird, und beim Abfüllen des Produkts in der Hohlform ein Unterdruck im Behälter herrscht.

Ein ausschließlich hydraulisches Aufpressen des Vorformlings hat den Vorteil, dass eine Druckluftversorgung für die Behandlungsstationen zum Zweck des Ausformens entbehrlich ist. Ein teilweise pneumatisches Aufblasen mit einem kompressiblen Formfluid kann jedoch insbesondere für ein anfängliches Vorblasen des Behälters in der Hohlform vorteilhaft sein. Ebenso könnte das kompressible Formfluid Kohlendioxid sein, das nach dem Vorblasen zumindest anteilig im Vorformling / Behälter verbleibt und im anschließend unter Überdruck eigeleiteten inkompressiblen Formfluid in Lösung geht, um das Produkt zu karbonisieren.

Das Formfluid könnte hinsichtlich seines Volumenanteils eine Hauptkomponente des abzufüllenden Produkts sein, insbesondere ein Verdünnungsmittel für eine als Konzentrat vorgehaltene und beim Füllen eingeleitete Produktkomponente, wie beispielsweise Sirup. Das Produkt, beispielsweise ein Getränk, wird dann im Behälter gemischt. Hierzu wird vorzugsweise kein Unterdruck im Behälter erzeugt und/oder nur der durch die Produktkomponente zu ersetzende Volumenenteil aus dem Behälter entfernt.

Beispielsweise wird das Formfluid beim Füllen dann anteilig durch Einleiten der Produktkomponente mit Überdruck verdrängt. Formfluid und Produktkomponente werden vorzugsweise über getrennte Zuleitungen am Ventilkopf bereitgestellt, könnten aber auch durch eine gemeinsamen Zuleitung seriell durch den Ventilkopf gefördert werden.

Vorzugsweise werden die Vorformlinge vor und/oder während des Einleitens des inkompressiblen Formfluids mechanisch gereckt. Mittels einer Reckstange lässt sich eine gezielte Längsverformung des Vorformlings bewirken oder zumindest unterstützen.

Vorzugsweise wird der Druck des inkompressiblen Formfluids beim Umformen der Vorformlinge jeweils gesteuert verändert. Beispielsweise kann das Druckniveau im Formfluid im Wesentlichen stufenweise geändert werden. Einem zu Beginn des Umformens herrschenden Niveau des Fluiddrucks könnten weitere Druckniveaus folgen, die nicht zwangsläufig zunehmend ansteigend ausgebildet sein müssen. Druckanstieg und Druckabnahme könnten in beliebiger Reihenfolge während des einzelnen Umformprozesses kombiniert werden, um beispielsweise unterschiedliche Streckraten in einzelnen Phasen des Umformprozesses zu erzeugen. Ein hydraulisches Aufpressen des Vorformlings ist jedoch prinzipiell auch bei einheitlichem Fluiddruck möglich.

Vorzugsweise wird das inkompressible Formfluid für das Umformen, insbesondere für einen zeitlichen Teilabschnitt des Umformens, auf eine Konditionierungstemperatur zur Konditionierung des Kunststoffs erwärmt. Das inkompressible Formfluid wird dann vorzugsweise noch während des Umformens demgegenüber wieder abgekühlt. Die Temperatur des Formfluids ist somit insbesondere zu Beginn des Einleitens höher als zum Ende des Einleitens.

Die Konditionierungstemperatur kann beispielsweise den Kristallisationsgrad und/oder die Kristallisationsgeschwindigkeit des Kunststoffs beeinflussen. So ist es denkbar, thermisch induzierte Kristallisation durch Einleiten bei einer Konditionierungstemperatur von 80-90 °C zu unterdrücken. Auch könnte die Konditionierungstemperatur höher sein als eine beim Einleiten des Formfluids im Vorformling herrschende Temperatur, wie beispielsweise eine mittlere Wandtemperatur in einem bestimmten Bereich des Vorformlings. Ebenso kann einer durch Verstreckung mechanisch induzierten Kristallisation des Kunststoffs gezielt in bestimmten Phasen der Umformung entgegengewirkt werden, insbesondere falls die Konditionierungstemperatur höher ist als eine Temperatur des Vorformlings oder eines bestimmten Bereichs des Vorformlings.

Einleiten eines gegenüber der Konditionierungstemperatur abgekühlten Formfluids gegen Ende des Umformens, wie beispielsweise nach Erreichen von 90% des endgültigen Behältervolumens, oder nach Abschluss des Umformens begünstigt eine schnelle Abkühlung des Behälters, um eine für das anschließende Abfüllen in der Hohlform und/oder die Entnahme des Behälters erwünschte mechanische Stabilität des Behälters zu gewährleisten.

Druck und/oder Temperatur des inkompressiblen Formfluids können individuell an jeder Behandlungsstation angepasst werden und/oder in den Zuleitungen in einem geeigneten Druckbereich / Temperaturbereich bereitgestellt werden. Druck und/oder Temperatur des Formfluids können somit in Vorlagebehältern, Zuleitungen oder dergleichen grob voreingestellt werden und an den einzelnen Behandlungsstationen fein eingestellt werden und/oder innerhalb der einzelnen Umformtakte gezielt zeitlich verändert werden. Ebenso wäre es denkbar, Druck und/oder Temperatur des inkompressiblen Formfluids ausschließlich zentral anzupassen.

Vorzugsweise besteht das Formfluid aus sterilem Wasser und/oder aus einem Sterilisationsmittel, das aus dem Behälter mit insbesondere sterilem Wasser vorzugsweise heraus gespült wird. Dadurch lässt sich eine Rekontamination der Vorformlinge, die aufgrund ihrer thermischen Vorgeschichte beim Aufheizen in einem Ofen im Wesentlichen steril einlaufen, verhindern. Mit einem inkompressiblen Sterilisationsmittel, wie beispielsweise Peressigsäure, lässt sich der hergestellte Behälter zusätzlich reinigen und/oder sterilisieren.

Vorzugsweise wird das Sterilisationsmittel aus dem Behälter durch Spülen mit insbesondere sterilem Wasser entfernt. Nach einem gegebenenfalls anteiligen hydraulischen Umformen mit Sterilisationsmittel kann der noch nicht fertig ausgeformte Behälter zuerst durch Absaugen entleert und dann mit vorzugsweise sterilem Wasser weiter hydraulisch ausgeformt werden. Spülen wäre jedoch auch ohne Absaugung denkbar, indem vorzugsweise steriles Wasser das Sterilisationsmittel aus dem noch nicht oder bereits fertig ausgeformten Behälter verdrängt.

Im erfindungsgemäßen Füllverfahren wird für das Einfüllen des Produkts oder der Produktkomponente ein interner Unterdruck im Behälter erzeugt. Der interne Unterdruck im Behälter ermöglicht ein schnelles Füllen mit Produkt und/oder Produktkomponenten. Hierzu ist lediglich ein Ventil, das eine Verbindung zu einem Vorlagebehälter und/oder einer Produktleitung herstellt, zu öffnen. Das Produkt schießt aus dem Ventilkopf, je nach herrschendem Druckunterschied, strahlförmig in den Behälter. Der interne Unterdruck liegt beispielsweis zwischen 0,6 und 0,9 bar. Vorzugsweise wird der Behälter vor dem Erstellen des Unterdrucks im Behälter vollständig entleert, das heißt, das Formfluid und/oder das Sterilisations- und/oder das Spülfluid wird entfernt. Das Entfernen kann beispielsweise durch Ablassen des Formfluids (insbesondere, wenn der Behälter in der Hohlform mit der Öffnung in Schwerkraftrichtung nach unten eingebracht ist) erfolgen, ebenso durch zumindest teilweises Heraussaugen des Formfluids mittels der Fluiddüse / Fülldüse und/oder der Reckstange.

Vorzugsweise wird der interne Unterdruck zumindest anteilig durch Absaugen des Formfluids aus dem Behälter erzeugt. Zu diesem Zweck wird der fertig ausgeformte Behälter über den Ventilkopf an eine Unterdruckleitung / Absaugeinheit angeschlossen, sodass das Formfluid aus dem Behälter entfernt wird und in einem Arbeitsschritt ein interner Unterdruck erzeugt wird. Dieser wird für das anschließende Abfüllen aufrechterhalten oder lediglich ergänzt. Somit lässt sich gleichzeitig ein unerwünschtes Eindringen von Umgebungsluft in den Behälter vermeiden.

Vorzugsweise wird zum Einfüllen des Produkts oder der Produktkomponente auf der Außenseite des Behälters ein externer Unterdruck erzeugt, der dem internen Unterdruck am Behälter kompensatorisch entgegenwirkt. Somit lässt sich an der Behälterwand näherungsweise ein Druckgleichgewicht herstellen, das ein Kollabieren des Behälters, also ein Zusammenziehen der Behälterwand nach innen, und somit eine Reduzierung des Behältervolumens beim Abfüllen verhindert.

Der externe Unterdruck kann beispielweise durch Kanäle in der Wand der Hohlform, die gegebenenfalls auch zur Entlüftung beim Ausformen des Behälters dienen, erzeugt werden. Der Bereich der Hohlform, in dem der externe Unterdruck erzeugt wird, ist vorzugsweise entsprechend luftdicht nach außen hin abgedichtet. Dies ermöglicht eine effiziente Kompensation des internen Unterdrucks, insbesondere auf einem für eine schnelle Abfüllung innerhalb von 0,2-0,5 s ausreichend niedrigen Unterdruckniveau.

Vorzugsweise wird das Produkt oder die Produktkomponente unter Überdruckbedingungen in den mit internem Unterdruck beaufschlagten Behälter gegeben. Überdruckbedingungen herrschen in diesem Sinne beispielsweise dann, wenn zusätzlich zu einem hydrostatischen Leitungsdruck (beispielsweise infolge eines Gefälles zwischen dem Produktpegel in einem Vorlagebehälter und der Fluiddüse / Fülldüse) ein Überdruck erzeugt wird, beispielsweise durch aktiven Energieeintrag in einen Vorlagebehälter, eine Zuleitung, den Ventilkopf oder dergleichen. Der hydrostatische Druck des Produkts wird dann vorzugsweise durch Regelung seines Füllstands in einem Vorlagebehälter oder dergleichen stabilisiert.

Vorzugsweise werden die Behälter unmittelbar vor dem Füllen aus einer Lage mit nach unten weisender Mündung in eine Lage mit nach oben weisender Mündung gedreht. Die Hohlformen können prinzipiell mit dem Ventilkopf nach unten und/oder mit dem Ventilkopf nach oben durch die Formfüllmaschine gefahren werden. Die Orientierung der Vorformlinge / Behälter kann sich beim Umlaufen an der Formfüllmaschine ändern, insbesondere zum Umformen mit Mündung nach oben und zum Entfernen des Formfluids mit Mündung nach unten. Die Schwerkraft unterstützt und vereinfacht dann ein Absaugen des Formfluids. Beim Abfüllen wird der Behälter dann wieder mit Mündung nach oben transportiert.

Die erfindungsgemäße Formfüllmaschine eignet sich zum Durchführen des Verfahrens gemäß wenigstens einer der obigen Ausgestaltungen und umfasst mehrere Behandlungsstationen, die zum selektiven Einleiten des Formfluids in die Vorformlinge und zum selektiven Einleiten des Produkts oder der Komponente des Produkts in die Behälter ausgebildet sind. Zum selektiven Einleiten sind insbesondere von einer elektrischen Steuereinheit ansteuerbare Ventile vorhanden.

Ferner umfassen die Behandlungsstationen Ventilköpfe mit durch die Ventilköpfe führenden und/oder gesteuert verschließbaren Zuleitungen für das Formfluid und das Produkt / die Komponente des Produkts. Formfluid und Produkt / Produktkomponente lassen sich beispielsweise über getrennte Zuleitungen zuführen und getrennt mit im/am Ventilkopf ausgebildeten Ventilen zuschalten. Formfluid und Produkt / Produktkomponente werden durch eine am Ventilkopf ausgebildete Fluiddüse in den Vorformling / Behälter eingeleitet. Die Fluiddüse arbeitet als kombinierte Formdüse (im Sinne einer Blasdüse) und Fülldüse (im Sinne eines Füllventils).

Sämtliche beschriebenen Ausführungsformen sind besonders vorteilhaft bei wenigstens anteilig hydraulischem Ausformen der Behälter. Ausschließlich pneumatisch mit Druckluft oder dergleichen ausgeformte Behälter lassen sich in einer Formfüllmaschine jedoch ebenso bei internem Unterdruck besonders effizient füllen. Es sind dann betroffene hydraulische Leitungen, Ventile oder dergleichen für kompressible Formfluide auszubilden, wie beispielsweise Blasluft, Kohlendioxid oder dergleichen.

Insbesondere die nachfolgenden Ausführungsformen können daher außerhalb der Erfindung auch mit einer Formfüllmaschine zum Ausformen und Füllen von Behältern in Hohlformen gebildet werden, die mehrere Hohlformen mit Ventilköpfen umfasst, die zum selektiven Einleiten wenigstens eines kompressiblen und/oder inkompressiblen Formfluids unter Überdruck in die Vorformlinge und zum selektiven Einleiten eines Produkts in die Behälter ausgebildet sind. Es sind dann beispielsweise getrennt elektrisch ansteuerbare Ventile für das kompressible Formfluid und das Produkt im/am Ventilkopf ausgebildet.

Ferner umfasst die erfindungsgemäße Formfüllmaschine durch die Ventilköpfe führende und/oder gesteuert verschließbare Absaugleitungen zum Absaugen des Formfluids aus den Behältern und/oder zum Erzeugen eines internen Unterdrucks innerhalb der Behälter. Ein gesteuertes Verschließen ermöglichen beispielsweise elektrisch ansteuerbare Ventile.

Vorzugsweise umfassen die Behandlungsstationen ferner Dichtelemente, um Formteile, die jeweils eine der Hohlformen ausbilden, gegenseitig und gegenüber dem jeweils zugeordneten Ventilkopf luftdicht abzudichten. Es lässt sich somit ein Unterdruck innerhalb eines von der Hohlform ausgebildeten Umformraums und außerhalb der Behälter effizient erzeugen und/oder aufrecht erhalten.

Vorzugsweise sind in den Hohlformen Entlüftungskanäle ausgebildet, die sich gesteuert verschließen und/oder gesteuert an Absaugleitungen anschließen lassen, um einen externen Unterdruck in den Hohlformen außerhalb der Behälter zu erzeugen. Hierzu eignet sich beispielsweise ein insbesondere elektrisch gesteuertes Dreiwegeventil.

Beispielsweise verlaufen die Dichtelemente entlang der inneren Hohlformkontur und sind in seitlichen Formteilen befestigt. Ebenso könnten Dichtelemente in Trägerschalen für die seitlichen Formteile der Hohlform ausgebildet sein. Vorzugsweise sind ferner Dichtelemente zwischen seitlichen Formteilen und einem unteren Formteil sowie dem Ventilkopf ausgebildet.

Vorzugsweise umfassen die Behandlungsstationen ferner jeweils individuell ansteuerbare Kompressoren und/oder Heizelemente für das Formfluid. Dadurch lassen sich Druckverläufe und Temperaturverläufe an jeder Behandlungsstation und für jeden Behälter getrennt erzeugen.

Die erfindungsgemäße Formfüllmaschine basiert vorzugsweise auf einem kontinuierlich drehbaren Karussell, an dem mehrere Behandlungsstationen befestigt sind. Vorhanden ist vorzugsweise ferner ein mittels Einlaufstern oder dergleichen angekoppelter Ofen zum Erwärmen der Vorformlinge. Diese könnten allerdings auch direkt von einer angeschlossenen Spritzgussmaschine mit geeigneter Einlauftemperatur bereitgestellt werden. Vorhanden ist vorzugsweise ferner eine Verschließmaschine, die mittels Auslaufstern oder dergleichen angekoppelt oder im Bereich eines Auslaufsterns ausgebildet ist. Allerdings könnten die mit Produkt gefüllten Behälter auch auf dem Karussell umlaufend verschlossen werden.

Eine bevorzugte Ausführungsform der erfindungsgemäßen Formfüllmaschine ist in der Zeichnung dargestellt. Es zeigen:
- Fig. 1: eine schematische Draufsicht auf die bevorzugte Ausführungsform;
- Fig. 2: einen schematischen Längsschnitt durch eine bevorzugte Ausführungsform einer erfindungsgemäßen Behandlungsstation; und
- Fig. 3: eine schematische Darstellung bevorzugter Dichtmittel für die erfindungsgemäße Hohlform.

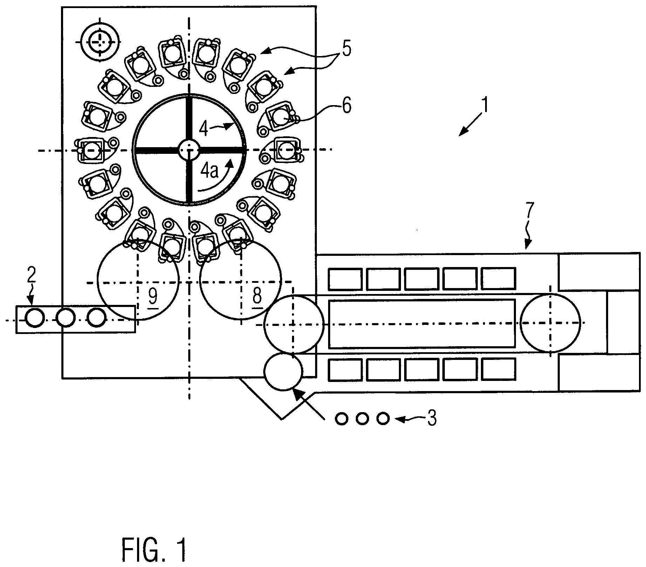

Wie die Fig. 1 erkennen lässt, umfasst die erfindungsgemäße Formfüllmaschine 1 zum Ausformen von Behältern 2 aus Vorformlingen 3 in einer bevorzugten Ausführungsform ein insbesondere mit einer kontinuierlichen Transportbewegung 4a drehbares Karussell 4, an dem mehrere Behandlungsstationen 5 mit Hohlformen 6 zum Ausformen und Füllen der Behälter 2 entlang (eines in der Fig. 1 angedeuteten) Teilkreises in an sich bekannter Weise umlaufen.

Die aus einem thermoplastischen Kunststoff bestehenden Vorformlinge 3 werden eingangs in einem Ofen 7 für das anschließende Ausformen erwärmt und mittels eines Einlaufsterns 8 an die Behandlungsstationen 5 übergeben. Die ausgeformten und gefüllten Behälter 2 werden von einem Auslaufstern 9 an ein Transportmittel oder eine (nicht dargestellte) Verschließmaschine für die Behälter 2 übergeben. Die Behälter 2 könnten ebenso im Transportbereich des Auslaufsterns 9 oder des Karussells 4 verschlossen werden.

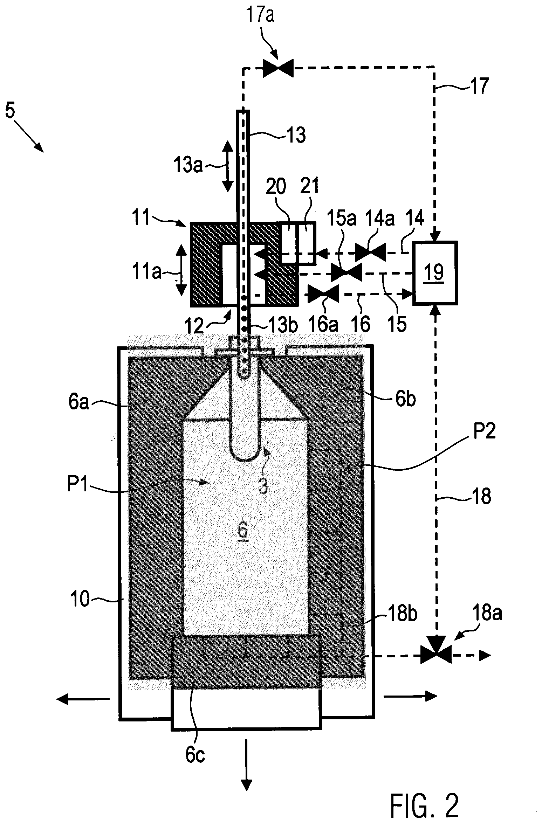

Wie die Fig. 2 erkennen lässt, umfassen die erfindungsgemäßen Behandlungsstationen 5 in einer bevorzugten Ausführungsform je eine Hohlform 6, die aus zueinander beweglichen (siehe Pfeile in der Fig. 2) Formteilen 6a-6c besteht und von einem mehrteiligen Formträger 10 gehalten wird, sowie je einen Ventilkopf 11. Mittels einer (an sich bekannten und daher nicht dargestellten) Hubeinheit lässt sich ein Hub 11a des Ventilkopfs 11 ausführen, um diesen bis auf die Hohlform 6 und einen darin platzierten Vorformling 3 abdichtend abzusenken. Die seitlichen Formteile 6a, 6b sind für das Entformen auseinander schwenkbar und werden auch Formhälften genannt. Das untere Formteil 6c lässt sich nach unten abziehen und wird auch Bodentasse genannt. Die Hohlform 6 wird beispielsweise mittels mechanischer Kurvensteuerung geöffnet / geschlossen.

Der Hohlform 6 zugewandt ist am Ventilkopf 11 eine Fluiddüse 12 ausgebildet, die einen Fluidtransport in den und aus dem Vorformling 3 ermöglicht. Durch den Ventilkopf 11 ist eine Reckstange 13 pneumatisch und hydraulisch abdichtend geführt. Mittels einer weiteren (an sich bekannten und daher nicht dargestellten) Hubeinheit lässt sich ein Hub 13a der Reckstange 13a bezüglich des Ventilkopfs 11 ausführen, um die Reckstange 13 durch die Fluiddüse 12 in den Vorformling 3 einzuführen und demzufolge beim Umformen mechanisch in Längsrichtung zu recken.

In der Fig. 2 sind beispielhaft Fließwege / Leitungen 14-18 für inkompressible und kompressible Fluide durch gestrichelte Pfeile schematisch angedeutet. Lediglich schematisch dargestellt sind zugehörige, elektrisch und/oder pneumatisch ansteuerbare Ventile 14a-18a zum gesteuerten Öffnen und Schließen der einzelnen Fließwege / Leitungen 14-18. Hierfür eignen sich prinzipiell alle Ventile, die für die jeweiligen Fluide, gegebenenfalls auch für Mittel zur Reinigung und/oder Entkeimung, ausgelegt sind. Die Lage der Ventile 14a-18a in der Fig. 2 dient einer übersichtlichen Darstellung. Insbesondere die mit der Fluiddüse 12 verbundenen Ventile 14a-16a sind vorzugsweise in den Ventilkopf 11 im Sinne eines Ventilblocks integriert.

Die Fluiddüse 12 ist demnach mit einer gesteuert zu öffnenden Zuleitung 14 für ein inkompressibles Formfluid verbunden, das beispielsweise steriles Wasser oder dergleichen ist. Ferner ist die Fluiddüse 12 vorzugsweise mit einer separaten, gesteuert zu öffnenden Zuleitung 15 für ein flüssiges Produkt oder eine Komponente des Produkts verbunden, beispielsweise für ein fertig ausgemischtes Getränk oder ein mit dem Formfluid mischbares Produktkonzentrat.

Für ein serielles Dosieren eines Produktkonzentrats in das nach dem Ausformen im Behälter 2 vorhandene Formfluid wäre auch eine gemeinsame Zuleitung 14 zum Ventilkopf 11 denkbar. Die Zuleitung 15 könnte dann beispielsweise auch zum Dosieren fester Produktbestandteile, wie beispielsweise Fruchtstücke, verwendet werden. Ebenso könnte für diesen Zweck eine weitere Zuleitung vorhanden sein. Dafür geeignet wäre beispielsweise (nach Umkehren des in der Fig. 2 dargestellten Fließwegs) eine optional durch die Reckstange 13 führende Leitung 17.

Die Fluiddüse 12 ist vorzugsweise mit wenigstens einer gesteuert zu öffnenden Absaugleitung 16 für das Formfluid und/oder allgemein zur Evakuierung des Behälters 2 verbunden.

Im Beispiel ist die Leitung 17 zum Absaugen durch eine optional rohrförmig ausgebildete Reckstange 13 und darin vorhandene Öffnungen 13b ausgebildet, um beispielsweise Formfluid im Bodenbereich des Behälters 2 gezielt, schnell und/oder vollständig abzusaugen. Die Öffnungen 13b könnten allerdings beliebig ausgebildet und/oder an der Reckstange 13 verteilt sein, insbesondere auch durch eine stirnseitige Öffnung ergänzt oder ersetzt werden.

Bei einem vollständigen Absaugen des Formfluids durch die Absaugleitung 16 und/oder die Leitung 17 wird vorzugsweise ein für das anschließende Füllen geeigneter interner Unterdruck P1 im Behälter 2 erzeugt.

Vorzugsweise ist wenigstens eine pneumatische Absaugleitung 18 vorhanden, mit der ein zwischen Hohlform 6 und Behälter 2 wirkender externer Unterdruck P2 erzeugt werden kann. Die Absaugleitung 18 ist dann vorzugsweise an ein elektrisch oder pneumatisch gesteuertes Dreiwegeventil 18a und (lediglich schematisch angedeutete) Entlüftungskanäle 18b angeschlossen.

Das Dreiwegeventil 18a ermöglicht die gezielte Entlüftung der Hohlform 6 beim Expandieren des Vorformlings 3 und die gezielte externe Evakuierung zwischen Hohlform 6 und Behälter 2 beim Füllen mit dem internen Unterdruck P1. Der externe Unterdruck P2 kompensiert den internen Unterdruck P1 wenigstens in einem Maße, dass sich dünne Behälterwände 2 trotz des internen Unterdrucks P1 nicht nach innen verformen. Der Behälter 2 hat demzufolge beim Füllen sein Sollvolumen.

Schematisch angedeutet ist ferner ein für die Behandlungsstationen 5 gemeinsam am Karussell 4 ausgebildeter Medienverteiler 19, beispielweise ein Drehverteiler mit Ringkanälen für Fluide.

Schematisch angedeutet ist ferner ein hydraulischer Kompressor 20, um einen Überdruck im insbesondere inkompressiblen Formfluid individuell für die jeweilige Behandlungsstation 5 zu erzeugen oder ausgehend von einem Druckniveau in der Zuleitung 14 zu erhöhen. Damit lassen sich beim Ausformen der einzelnen Behälter 2 zeitliche Verläufe des Drucks im Formfluid gesteuert und reproduzierbar erzeugen. Hierbei könnte das Ventil 14a in vorteilhafter Weise auch zwischen Kompressor 20 und Fluiddüse 12 ausgebildet sein.

An dem Ventilkopf 11, dem Kompressor 20 und/oder der Zuleitung 14 kann ferner ein Heizelement 21 für das Formfluid ausgebildet sein, um dieses individuell an jeder Behandlungsstation 5 zu erwärmen. Damit lassen sich für das Ausformen der einzelnen Behälter 2 zeitliche Verläufe der Temperatur im Formfluid gesteuert und reproduzierbar erzeugen. Außerdem lässt sich das Formfluid auf wenigstens eine gewünschte Konditionierungstemperatur erwärmen, bei der sich das Material des Vorformlings 3 vor oder während des Umformens gezielt konditionieren lässt, beispielweise zum Beeinflussen der Kristallisation im Kunststoff.

Alternativ oder anteilig könnten der Überdruck und/oder die Temperatur des Formfluids zentral für mehrere Behandlungsstationen 5 oder in den jeweiligen Zuleitungen 14 eingestellt werden. Ebenso wäre es denkbar, an jeder Behandlungsstation 5 mehrere Zuleitungen 14 für das Formfluid bei unterschiedlichen Druckniveaus und/oder Temperaturniveaus vorzuhalten und das Formfluid beim Ausformen des Behälters 2 selektiv aus diesen Zuleitungen zuzuschalten und/oder zu mischen.

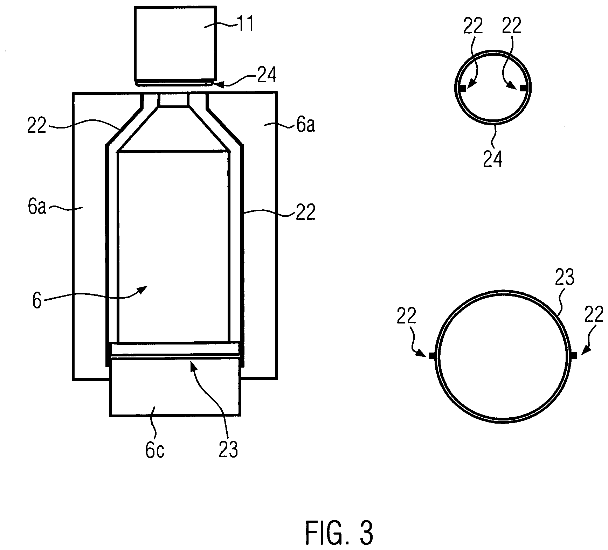

Wie insbesondere die linke Hälfte der Figur 3 in einer schematischen seitlichen Ansicht erkennen lässt, sind ferner Dichtelemente 22-24 vorhanden, mit denen die Hohlform 6 beim Füllen des Behälters 2 nach außen hin und gegen den Ventilkopf 11 pneumatisch abgedichtet ist, um den externen Unterdruck P2 herzustellen und/oder aufrecht zu erhalten. Die Entlüftungskanäle 18b sind zu diesem Zweck luftdicht verschließbar und/oder luftdicht mittels des Dreiwegeventils 18a an die Absaugleitung 18 angeschlossen.

Vorzugsweise sind an den seitlichen Formteilen 6a und/oder 6b beispielsweise entlang der inneren Kontur der Hohlform 6 verlaufende seitliche Dichtelemente 22 ausgebildet, die beispielsweise in einem entsprechenden Ventilsitz an den Formteilen 6a, 6b befestigt sind und bei geschlossener Hohlform 6 im Wesentlichen in deren gemeinsamer Trennebene liegen.

Ferner ist entlang des gesamten Umfangs des unteren Formteils 6c wenigstens ein unteres Dichtelement 23 ausgebildet, das beispielsweise in einem entsprechenden Ventilsitz am Formteil 6c befestigt ist und bei geschlossener Hohlform 6 im Wesentlichen quer zur Trennebene verläuft und gegen die seitlichen Formteile 6a, 6b abdichtet.

Ferner ist stirnseitig und vollumfänglich am Ventilkopf 11 wenigstens ein oberes Dichtelement 24 ausgebildet, das beispielsweise in einem entsprechenden Ventilsitz am Ventilkopf 11 befestigt ist und bei geschlossener Hohlform 6 im Wesentlichen quer zur Trennebene verläuft und gegen die seitlichen Formteile 6a, 6b abdichtet. Es wäre allerdings auch möglich, das obere Dichtelement 24 in zwei Teilen auf der oberen Stirnseite der seitlichen Formhälften 6a, 6b auszubilden.

Wie insbesondere die rechte Hälfte der Fig. 3 im Querschnitt verdeutlicht, überlappen oder überkreuzen die Dichtelemente 22 vorzugsweise sowohl mit dem unteren Dichtelement 23 als auch mit dem oberen Dichtelement 24. Die Dichtelemente können beliebige Profile aufweisen und bestehen an ihren Dichtflächen aus einem Gummi, Silikon oder dergleichen elastischen Material.

Hohlform 6 und Ventilkopf 11 könnten um eine horizontale Achse schwenkbar an der Behandlungsstation 5 gelagert sein (nicht dargestellt), um ein Ablaufen und Absaugen des Formfluids aus dem ausformten Behälter 2 bei nach unten weisender Mündung des Behälters 2 ebenso zu ermöglichen wie ein Füllen des Behälters 2 mit Produkt bei nach oben weisender Mündung. Oberseite und Unterseite der Formteile 6a-6c sind somit nicht hinsichtlich ihrer Orientierung am Karussell 4 sondern bezüglich der Mündung und des Bodens des Behälters 2 definiert.

Nach Anheben des Ventilkopfs 11 könnte der mit Produkt gefüllte Behälter 2 noch auf dem Karussell 4 mit einer Schraubkappe (nicht dargestellt) oder dergleichen verschlossen werden. Dies wäre insbesondere bei karbonisierten Getränken vorteilhaft. Die Behälter 2 können jedoch prinzipiell auch im Bereich des Auslaufsterns 9 oder in einer unmittelbar daran anschließenden Verschließmaschine verschlossen werden.

Für die hydraulische Umformung geeignete Kunststoffe sind beispielsweise PET, PE, PP oder dergleichen.

Mit der Formfüllmaschine 1 lässt sich beispielsweise wir folgt arbeiten:
Die Vorformlinge 3 werden als kontinuierlicher Produktstrom durch den Ofen 7 gefahren, darin auf eine geeignete Temperatur für das anschließende Umformen erwärmt, und von dem Einlaufstern 8 an je eine Behandlungsstation 5 übergeben. Möglich wäre auch eine Übergabe der Vorformlinge 3 direkt von einer Spritzgussmaschine an den Einlaufstern 8.

Je ein Vorformling 3 wird mit dem zu verformenden Bereich, beispielsweise der Bereich unterhalb eines an dem Vorformling 3 gegebenenfalls vorhandenen Tragrings, in einer der auf dem Karussell 4 kontinuierlich umlaufenden Hohlformen 6 in an sich bekannter Weise platziert und der zugehörige Ventilkopf 11 auf die Hohlform 6 und den Vorformling 3 abdichtend abgesenkt.

Das inkompressible Formfluid wird mit einem vorgegebenen Überdruck und einer vorgegebenen Temperatur durch den Ventilkopf 11 und die Fluiddüse 12 in den Vorformling 3 geleitet und der Vorformling 3 dadurch hydraulisch aufgepresst. Dies wird vorzugsweise durch mechanisches Recken des Vorformlings in seiner Längsrichtung unterstützt.

Druck und Temperatur des Formfluids werden während des Aufpressens vorzugsweise mit dem hydraulischen Kompressor 20 und dem Heizelement 21 programmiert an vorgegebene zeitliche Verläufe für den einzelnen Umformprozess angepasst. Die Anpassung erfolgt beispielsweise durch Eingabe und/oder Start von Programmen an der Formfüllmaschine 1. In der Hohlform 6 durch den sich ausbildenden Behälter 2 verdrängte Luft kann durch die Entlüftungsöffnungen 18b und das Dreiwegeventil 18a entweichen. Am Ende des Umformprozesses liegt die Wand des ausgeformten Behälters 2 an der Hohlform 6 an.

Ist das Formfluid nicht Bestandteil des abzufüllenden Produkts, wird der Behälter 2 mittels Absaugung durch die Fluiddüse 12 und den Ventilkopf 11 beispielsweise durch Öffnen des Ventils 16a und/oder 17a in der Leitung 16 und/oder 17 entleert. Dies kann dadurch unterstützt werden, dass der Behälter 2 vorübergehend kopfüber transportiert wird.

Ein durch Absaugung im Behälter 2 erzeugter interner Unterdruck wird für das anschließende Füllen aufrecht erhalten oder durch zusätzliche Absaugung weiter reduziert. Kompensatorisch wird zwischen Außenwand des Behälters 2 und der Hohlform 6 ein externer Unterdruck P2 durch Absaugung beispielsweise durch Öffnen des Ventils 18a zur Absaugleitung 18 hin erzeugt, um ein Kollabieren des Behälters 2 aufgrund des im Behälter 2 beim Füllen herrschenden internen Unterdrucks P1 zu vermeiden.

Bei einem im Behälter 2 herrschendem internen Unterdruck P1 wird das Ventil 15a in der Zuleitung 15 geöffnet, um das Produkt in den Behälter 2 zu leiten. Das Produkt wird zu diesem Zweck vorzugsweise mit einem geeigneten Überdruck in der Zuleitung 15 bereit gestellt. Nach Erreichen des vorgegebenen Füllvolumens wird das Ventil 15a wieder geschlossen, die Hohlform 6 geöffnet und der gefüllte Behälter 2 entnommen und an den Auslaufstern 9 übergeben.

Der Behälter 2 wird beispielsweise im Bereich des Auslaufsterns 9 oder in einer daran gekoppelten Verschließmaschine verschlossen. Ein Verschließen wäre ebenso in den umlaufenden Behandlungsstationen 5 möglich und dort insbesondere bei karbonisierten Getränken vorteilhaft.

Alternativ zum obigen Füllprozess könnte das Formfluid eine Komponente des Produkts sein und lediglich teilweise aus dem ausgeformten Behälter 2 entfernt werden. Dies wäre sowohl durch Absaugen des überschüssigen Formfluids möglich als auch durch Verdrängen des überschüssigen Formfluids beim Einleiten wenigstens einer weiteren Produktkomponente. Hierzu wird vorzugsweise die Zuleitung 15 verwendet und das Ventil 15a geöffnet. Allerdings könnte auch die Zuleitung 14 abwechselnd zum Zuführen des Formfluids und wenigstens einer Produktkomponente genutzt werden. Das abzufüllende Produkt wird somit bei dieser Abfüllvariante im Behälter 2, innerhalb der Hohlform 6, ausgemischt.

Die erfindungsgemäße Formfüllmaschine und das obige Verfahren zum Ausformen von Behältern und Abfüllen eines Produkts in der Hohlform ließen sich beliebig im Rahmen der beschriebenen Ausführungsformen auf technisch sinnvolle Weise modifizieren.

## Patentansprüche

1. Verfahren zum Ausformen und Füllen von Behältern (2) aus Kunststoff, bei dem Vorformlinge (3) in Hohlformen (6) durch zumindest anteiliges Einleiten eines inkompressiblen Formfluids unter Überdruck zu den Behältern umgeformt werden, und bei dem die Behälter in den Hohlformen mit einem Produkt gefüllt werden, indem das Formfluid durch das Produkt ersetzt wird oder durch wenigstens eine Komponente des Produkts teilweise ersetzt wird, wobei für das Einfüllen des Produkts oder der Produktkomponente ein interner Unterdruck (P1) im Behälter (2) erzeugt wird.

2. Verfahren nach Anspruch 1, bei dem die Vorformlinge (3) vor und/oder während des Einleitens des Formfluids mechanisch gereckt werden.

3. Verfahren nach Anspruch 1 oder 2, wobei der Druck des Formfluids beim Umformen der Vorformlinge (3) jeweils gesteuert verändert wird.

4. Verfahren nach einem der vorigen Ansprüche, wobei das Formfluid für das Umformen, insbesondere für einen zeitlichen Teilabschnitt des Umformens, auf eine Konditionierungstemperatur zur Konditionierung des Kunststoffs erwärmt wird, und insbesondere noch während des Umformens demgegenüber abgekühlt wird.

5. Verfahren nach wenigstens einem der vorigen Ansprüche, wobei das Formfluid aus sterilem Wasser besteht und/oder aus einem Sterilisationsmittel besteht, das vorzugsweise aus dem Behälter (2) mit insbesondere sterilem Wasser heraus gespült wird.

6. Verfahren nach Anspruch 1, wobei der interne Unterdruck (P1) zumindest anteilig durch Absaugen des Formfluids aus dem Behälter (2) erzeugt wird.

7. Verfahren nach Anspruch 1 oder 6, wobei zum Einfüllen des Produkts auf der Außenseite des Behälters ein externer Unterdruck (P2) erzeugt wird, der dem internen Unterdruck (P1) am Behälter (2) kompensatorisch entgegenwirkt.

8. Verfahren nach wenigstens einem der Ansprüche 1, 6 oder 7, wobei das Produkt oder die Produktkomponente unter Überdruckbedingungen in den mit internem Unterdruck (P1) versehenen Behälter (2) gegeben wird.

9. Verfahren nach wenigstens einem der vorigen Ansprüche, wobei der Behälter (2) unmittelbar vor dem Füllen aus einer Lage mit nach unten weisender Mündung in eine Lage mit nach oben weisender Mündung gedreht wird.

10. Formfüllmaschine (1) zum Durchführen des Verfahrens nach wenigstens einem der vorigen Ansprüche, mit mehreren Behandlungsstationen (5), die zum selektiven Einleiten des Formfluids in die Vorformlinge (3) und zum selektiven Einleiten des Produkts oder der Komponente des Produkts in die Behälter (2) ausgebildet sind, wobei die Behandlungsstationen (5) Ventilköpfe (11) umfassen mit durch die Ventilköpfe führenden und/oder gesteuert verschließbaren Zuleitungen (14, 15) für das Formfluid und das Produkt / die Komponente des Produkts, und ferner mit durch die Ventilköpfe (11) führenden und/oder gesteuert verschließbaren Absaugleitungen (16, 17) zum Absaugen des Formfluids aus den Behältern (2) und/oder zum Erzeugen eines internen Unterdrucks (P1) innerhalb der Behälter (2).

11. Formfüllmaschine nach Anspruch 10, wobei die Behandlungsstationen (5) ferner Dichtelemente (22-24) umfassen, um Formteile (6a-6b), die jeweils eine der Hohlformen (6) ausbilden, gegeneinander und gegenüber dem jeweils zugeordneten Ventilkopf (11) luftdicht abzudichten.

12. Formfüllmaschine nach einem der Ansprüche 10 bis 11, wobei in den Hohlformen (6) Entlüftungskanäle (18b) ausgebildet sind, die sich gesteuert verschließen und/oder gesteuert an Absaugleitungen (18) anschließen lassen, um einen externen Unterdruck (P2) in den Hohlformen (6) außerhalb der Behälter (2) zu erzeugen.

13. Formfüllmaschine nach einem der Ansprüche 10 bis 12, wobei die Behandlungsstationen (5) ferner jeweils individuell ansteuerbare Kompressoren (20) und/oder Heizelemente (21) für das Formfluid umfassen.

## Claims

1. Process for molding and filling of containers (2) made of plastic, in which preforms (3) are reshaped into containers in hollow molds (6) by means of at least partial introduction of an incompressible molding fluid under overpressure, and in which the containers in the hollow molds are filled with a product by replacing the molding fluid by the product or partially replacing the molding fluid by at least one component of the product, whereby an internal negative pressure (P1) is created in the container (2) for the filling process of the product or the product component.

2. Process according to claim 1, in which the preforms (3) are mechanically stretched prior to and/or during introduction of the molding fluid.

3. Process according to claim 1 or 2, whereby the pressure of the molding fluid is respectively changed in a controlled way during reshaping of the preforms (3).

4. Process according to one of the preceding claims, whereby the molding fluid is heated for the reshaping process, in particular for a time section of the reshaping process, to a conditioning temperature for conditioning of the plastic, and cooled down in relation to that temperature, in particular, during the reshaping process.

5. Process according to at least one of the preceding claims, whereby the molding fluid consists of sterile water and/or of a sterilization agent that is preferably rinsed out of the container (2) with particularly sterile water.

6. Process according to claim 1, whereby the internal negative pressure (P1) is created at least partially through suction of the molding fluid out of the container (2).

7. Process according to claim 1 or 6, whereby an external negative pressure (P2), which counter-acts the internal negative pressure (P1) on the container (2) in a compensatory way, is created to fill in the product on the external side of the container.

8. Process according to at least one of the claims 1, 6 or 7, whereby the product or the product component is put into the container (2), to which an internal negative pressure (P1) is applied, under overpressure conditions.

9. Process according to at least one of the preceding claims, whereby the container (2) is turned from a position with a downward facing outlet into a position with an upward facing outlet directly prior to the filling process.

10. Form-filling machine (1) to implement the process according to at least one of the preceding claims, with several treatment stations (5) that are adapted for selective introduction of the molding fluid into the preforms (3) and for selective introduction of the product or the component of the product into the containers (2), whereby the treatment stations (5) comprise valve heads (11) with feed lines (14, 15), which extend through the valve heads and/or that can be closed in a controlled way, for the molding fluid and the product / the component of the product, and further with suction lines (16, 17), that extend through the valve heads (11) and/or that can be closed in a controlled way, to suck the molding fluid out of the containers (2) and/or to generate an internal negative pressure (P1) within the containers (2).

11. Form-filling machine according to claim 10, whereby the treatment stations (5) further comprise sealing elements (22-24) to hermetically seal mold parts (6a-6b), that each form one of the hollow molds (6), against each other and with regard to the respectively associated valve head (11).

12. Form-filling machine according to one of the claims 10 to 11, whereby venting ducts (18b) are provided in the hollow molds (6), which can be closed and/or connected to suction lines (18) in a controlled way in order to create an external negative pressure (P2) in the hollow molds (6) outside of the containers (2).

13. Form-filling machine according to one of the claims 10 to 12, whereby the treatment stations (5) further comprise individually controllable compressors (20) and/or heating elements (21) for the molding fluid.

## Revendications

1. Procédé de démoulage et de remplissage de récipients (2) en matière plastique, dans lequel des préformes (3) sont transformées en récipients dans des moules creux (6) par introduction au moins partielle d'un fluide de moulage incompressible sous surpression, et dans lequel les récipients sont remplis d'un produit dans les moules creux par remplacement du fluide de moulage par le produit ou par remplacement partiel de celui-ci par au moins un composant du produit, une dépression interne (P1) étant générée dans le récipient (2) pour le remplissage du produit ou du composant du produit.

2. Procédé selon la revendication 1, dans lequel les préformes (3) sont étirées mécaniquement avant et/ou pendant l'introduction du fluide de moulage.

3. Procédé selon les revendications 1 ou 2, dans lequel la pression du fluide de moulage est modifiée de manière contrôlée lors du formage des préformes (3).

4. Procédé selon l'une des revendications précédentes, dans lequel le fluide de moulage pour le formage, en particulier pour une section partielle du formage, est chauffé à une température de conditionnement pour le conditionnement de la matière plastique et, en particulier, est refroidi pendant le formage.

5. Procédé selon au moins une des revendications précédentes, dans lequel le liquide de moulage est constitué d'eau stérile et/ou d'un agent stérilisant qui est de préférence évacué du récipient (2) avec de l'eau stérile en particulier.

6. Procédé selon la revendication 1, dans lequel la dépression interne (P1) est générée au moins proportionnellement en aspirant le fluide de moulage hors du récipient (2).

7. Procédé selon les revendications 1 ou 6, dans lequel pour le remplissage du produit, une dépression externe (P2) est générée à l'extérieur du récipient, qui contrebalance la dépression interne (P1) sur le récipient (2) de manière compensatoire.

8. Procédé selon au moins une des revendications 1, 6 ou 7, dans laquelle le produit ou le composant du produit est introduit dans le récipient (2) muni d'une dépression interne (P1) dans des conditions de surpression.

9. Procédé selon au moins l'une des revendications précédentes, dans lequel le récipient (2) est tourné immédiatement avant le remplissage d'une couche avec une ouverture tournée vers le bas en une couche avec une ouverture tournée vers le haut.

10. Machine de remplissage de moules (1) pour la mise en oeuvre du procédé selon au moins une des revendications précédentes, avec plusieurs stations de traitement (5) qui sont conçues pour l'introduction sélective du liquide de moulage dans les préformes (3) et pour l'introduction sélective du produit ou du composant du produit dans les récipients (2), les stations de traitement (5) comprenant des têtes de soupape (11) avec des conduites d'alimentation (14, 15), guidées à travers les têtes de soupape et/ou peuvent être fermées de manière contrôlée, pour le fluide de moulage et le produit/les composants du produit, et comprenant en outre des tuyaux d'aspiration (16, 17) qui sont conduits à travers les têtes de soupape (11) et/ou peuvent être fermés de manière contrôlée, pour aspirer le fluide de moulage hors des récipients (2) et/ou pour générer un vide interne (P1) dans les récipients (2).

11. Machine de remplissage de moules selon la revendication 10, dans laquelle les stations de traitement (5) comprennent en outre des éléments d'étanchéité (22-24) pour sceller de manière étanche à l'air des parties de moule (6a-6b), chacune formant l'un des moules creux (6), les unes par rapport aux autres et par rapport à la tête de soupape (11) associée respective.

12. Machine de remplissage de moules selon l'une des revendications 10 à 11, dans laquelle des conduites d'aération (18b) sont formées dans les moules creux (6), qui peuvent être fermés de manière contrôlée et/ou reliés à des conduites d'aspiration (18) de manière contrôlée afin de générer une dépression externe (P2) dans les moules creux (6) à l'extérieur des récipients (2).

13. Machine de remplissage de moules selon l'une des revendications 10 à 12, dans laquelle les stations de traitement (5) comprennent en outre dans chaque cas des compresseurs (20) et/ou des éléments chauffants (21) contrôlables individuellement pour le liquide de moulage.
